## Europäisches Patentamt

(19) **European Patent Office**

**Office européen des brevets**

(11) Publication number: **0 215 762**
**B1**

(12) # EUROPEAN PATENT SPECIFICATION

(45) Date of publication of the patent specification:
27.12.89

(51) Int. Cl.⁴: **F 24 J 2/52,** F 16 B 12/02,
A 47 F 5/08

(21) Application number: 86850303.8

(22) Date of filling: 11.09.86

(54) **Mounting device.**

(30) Priority: 13.09.85 SE 8504244

(43) Date of publication of application:
25.03.87 Bulletin 87/13

(45) Publication of the grant of the patent:
27.12.89 Bulletin 89/52

(84) Designated Contracting States:
AT BE CH DE FR GB IT LI NL

(56) References cited:
DE-A-2 240 992
DE-A-2 738 858
US-A-4 108 313
US-A-4 306 961
US-A-4 406 279

(73) Proprietor: **Scandinavian Solar AB, Box 24079, S-400
22 Göteborg (SE)**

(72) Inventor: **Hultmark, Göran, Väbelgatan 6, S-421 76
Västra Frölunda (SE)**

(74) Representative: **Roth, Ernst Adolf Michael,
GÖTEBORGS PATENTBYRA AB Box 5005, S-402
21 Göteborg (SE)**

## Description

The present invention relates to a mounting device for an object having two spaced-apart grooves arranged parallel and opposite each other, the mounting device comprising a first part having, at one end thereof, an edge section for engaging one of the grooves, and a second part having, at one end thereof, an edge section for engaging the other of the grooves, the parts being provided with fixing means for fixing both parts relative to each other in partially overlapping manner such that both edge sections engage the respective groove.

In many connections there is a desire to fasten an object to a frame, which can be of such a kind that the locations of the fastening points are not decided beforehand. There is also often a desire to be able to fasten the object either along its long sides or its short sides or along all four side edges of the object and preferably without using tools.

If the object is for example a solar collector cassette which is to be mounted to a slanting roof, it is required that the cassette should be easily mountable and dismountable without making any infrigement in the cassette, which in some cases can consist of a water reservoir.

The US-A-4 108 313 discloses a mounting rack for guns on vehicles. It comprises overlapping slide members having blade portions received between the moulding and the window glass of the vehicle or in mounting brackets on a surface. The slide members are held together in a desired relative position by bolts.

The US-A-4 308 961 discloses a support structure comprising a rail and a supporting member having a base member which is snapped into said rail.

The object of the present invention is to provide a mounting device which is easily mountable and dismountable, which makes a part of a hinge connection, which is simple and cheap in manufacturing and which offers a strong and effective attachment. These problems have been solved by the fact that the second part comprises, at the other end thereof, a free end edge and the first part comprises a plate section and a bracket projecting from the plane of the first part intermediate of the plate section and the end section, the bracket having a groove positioned to receive the end edge of the second part such that the second part overlaps the plate section of the first part and to hold both end sections in a fixed distance corresponding to the distance of the grooves and that the bracket has a free edge provided with a through hole for a hinge axle.

The invention will be described below with reference to the enclosed drawings which show some embodiments.

Fig. 1   shows in perspective a front part of a plate-shaped object provided with a mounting device according to the invention,

fig. 2   shows in perspective the fittings of the mounting device and which consists of two co-operating parts,

fig. 3   shows also in perspective the mounting device applied to a roof cassette, with the cassette arranged in the plane of the roof, and showing on a larger scale the mounting device encircled,

fig. 4   shows the mounting device applied at inclined roof cassettes, showing on a larger scale the mounting device encircled.

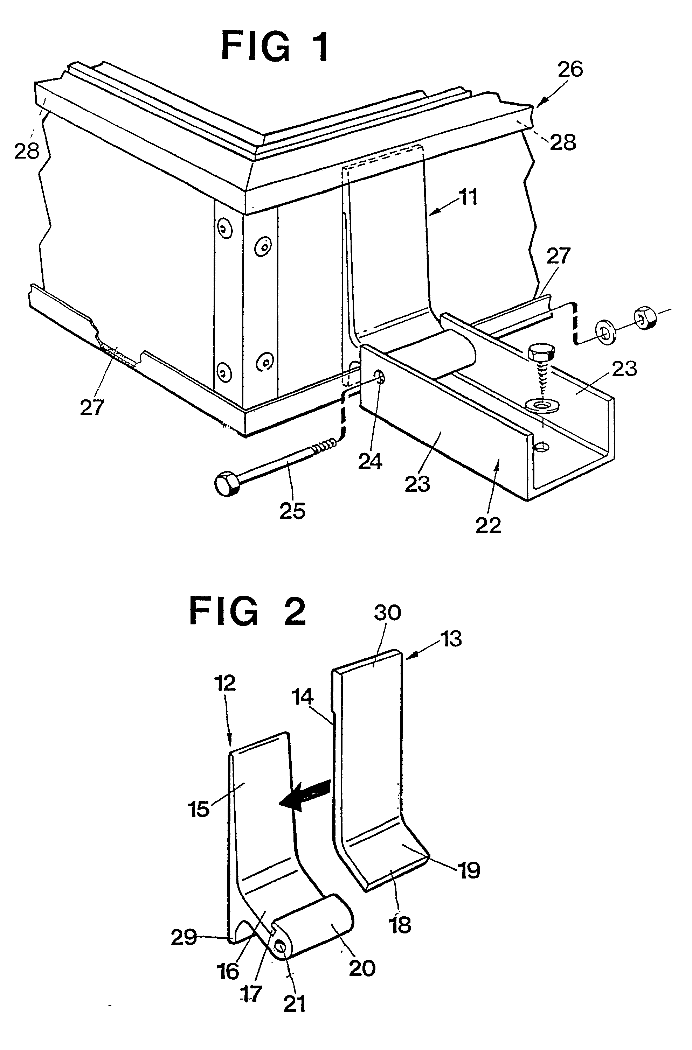

The mounting device 11 according to the invention consists of a two piece fittings comprising two plate-shaped parts 12 and 13, which partially overlap each other, at which in the second part 13 there is arranged a rear recess 14 corresponding to the somewhat tapering section 15 of the first part 12. The first part 12 is provided with a bracket 16 projecting therefrom provided with an open groove 17 in the direction towards the section 15, in which groove the end edge 18 of the second part 13 is insertable from the side. The lower section 19 of the part 13 is designed in the corresponding way as the bracket 16. The outer end section 20 of the bracket 16 is provided with a transverse hole 21, which together with said end section make one part of a hinge connection. The other part comprises a member 22 in the form of a U-profile bar, the free space between its shanks 23 corresponds to the width of the parts 12 and 13, as it is shown in fig. 1. The shanks 23 of the U-profile bar is provided with bores 24 for a screw serving as a hinge axle 25, which is threaded through the hole 21 in the bracket 16 and is fixed by means of a nut.

The two parts 12 and 13 of the mounting device 11 require at the object 26 at which it is to be attached, two parallel grooves 27 and 28, which are arranged at some distance from and just opposite each other, in which the lower edge 29 of the part 12 respectively the upper edge 30 of the second part 13 is insertable.

The mounting of the mounting device is done by placing the two parts 12 and 13 with their edge sections 29 and 30 in the respective grooves 27 and 28, after which the parts are displaced towards each other, at which the section 15 will be located in the recess 14 and the section 19 with its front end edge 18 will be located in the groove 17 of the bracket 16. The parts 12 and 13 are fixed against relative displacement by means of shanks 23 of the member 22, the member being fixed to the parts by means of the hinge axle 25. The member 22 thus beside its fixing function for the parts 12 and 13 works as a hinge and as an attachment for the object against a base.

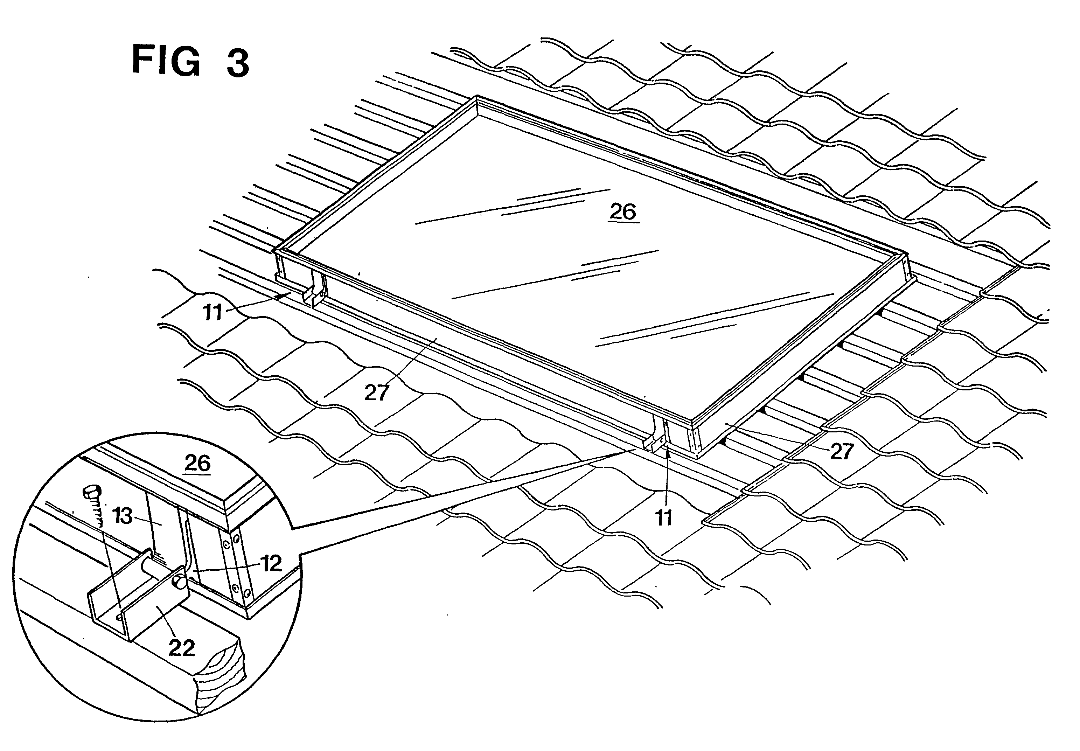

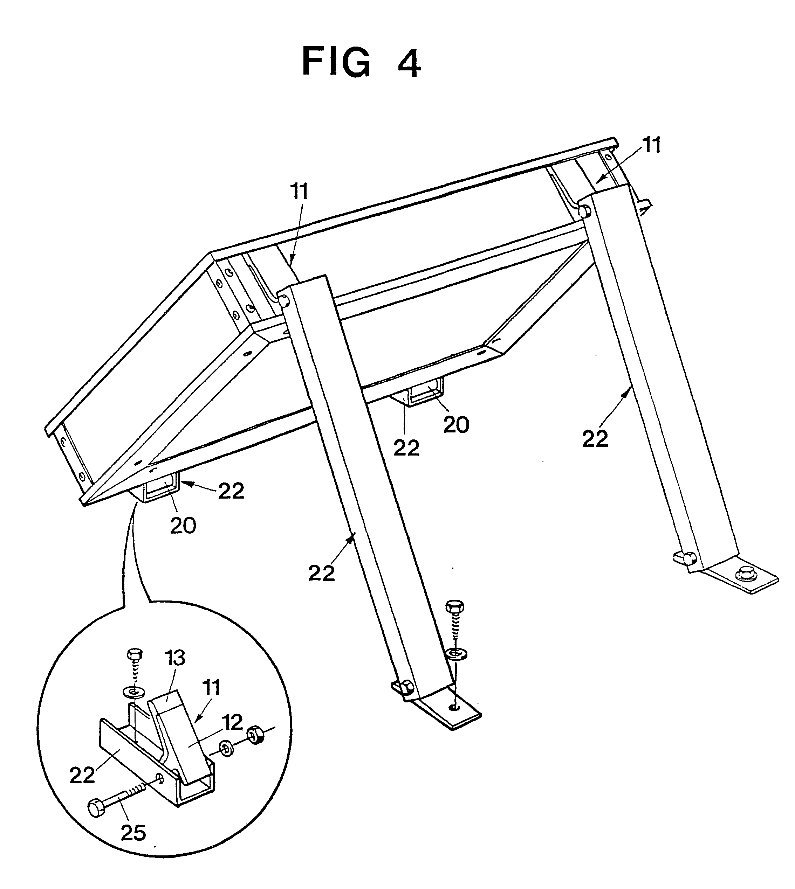

In fig. 3 the invention is shown applied at a cassette-shaped solar collector which is screwed at the rafter parallel with the roof surface. Fig. 4 shows an applied example where the solar collector cassette is held in an inclined position relative to the horizontal plane by means of the mounting devices according to the invention, at which the members 22 are designed as supports at the upper part of the cassette.

## Claims

1. Mounting device for an object having two spaced-apart grooves arranged parallel and opposite each other, the mounting device comprising a first part (12) having, at one end thereof, an edge section for engaging one of the grooves, and a second part (13) having, at one end thereof, an edge section for engaging the other of the grooves, the parts (12, 13) being provided with fixing means (17, 18) for fixing both parts relative to each other in a partially overlapping manner such that both edge sections engage the respective groove, *characterized in,* that the second part (13) comprises, at the other end thereof, a free end edge (18) and the first part comprises a plate section (15) and a bracket (16) projecting from the plane of the first part intermediate of the plate section (15) and the edge section (29), the bracket (16) having a groove (17) positioned to receive the end edge (18) of the second part such that the second part (13) overlaps the plate section (15) of the first part (12) and to hold both end sections (13), (29) in a fixed distance corresponding to the distance of the grooves and that the bracket (16) has a free edge provided with a through hole (21) for a hinge axle (25).

2. Mounting device according to claim 1, *characterized in,* that both parts (12, 13) are fixed against displacement sideways by means of at least one member (22) which partially surrounds the ends of the parts or extends through these.

3. Mounting device according to claims 2, *characterized in,* that the member (22) comprises a U-profile bar, the shanks (23) of which are arranged to form an attachment for the hinge axle and to fix the parts (12, 13) against displacement sideways and the hinge axle (25) extending through holes (24) in said shanks (23).

## Patentansprüche

1. Vorrichtung zur Montage eines Gegenstandes mit zwei in einem Abstand zueinander, parallel und sich gegenüberliegend angeordneten Nuten bestehend aus einem ersten Teil (12) mit einem Kantenbereich an dessen einem Ende zum Eingreifen in eine der Nuten und einem zweiten Teil (13) mit einem Kantenbereich an dessen einem Ende zum Eingriff in die andere der Nuten, wobei die Teile (12, 13) mit Befestigungseinrichtungen (17,18) versehen sind, um die beiden Teile sich teilweise überlappend miteinander zu verbinden, so daß die beiden Kantenbereiche mit der entsprechenden Nut in Eingriff stehen, *dadurch gekennzeichnet,* daß der zweite Teil (13) an seinem anderen Ende eine freie Endkante (18) und der erste Teil einen flachen Bereich (15) und eine Klammer (16) aufweist, die aus der Ebene des ersten Teils zwischen dem flachen Bereich (15) und dem Kantenbereich (29) hervorragt, wobei die Klammer (16) eine Nut (17) aufweist, die die Endkante (18) des zweiten Teils aufnimmt, so daß der zweite Teil (13) den flachen Bereich (15) des ersten Teils (12) überlappt und beide Endbereiche (13), (29) in einem festen Abstand entsprechend dem Abstand der Nuten gehalten werden, und daß die Klammer (16) eine freie Kante mit einer für eine Scharnierachse (25) vorgesehenen Durchbohrung (21) aufweist.

2. Montagevorrichtung nach Anspruch 1, *dadurch gekennzeichnet,* daß beide Teile (12,13) gegen seitliche Verschiebung mit mindestens einem Glied (22) gesichert sind, das die Enden der Teile teilweise umgibt oder sich um diese erstreckt.

3. Montagevorrichtung nach Anspruch 2, *dadurch gekennzeichnet,* daß das Glied (22) ein U-Profil ist, dessen Schenkel (23) zur Bildung einer Halterung für die Scharnierachse und zur Sicherung der Teile (12, 13) gegen seitliche Verschiebung ausgebildet sind, und die Scharnierachse (25) sich durch die Durchbohrungen (24) in den Schenkeln (23) erstreckt.

## Revendications

1. Dispositif de montage destiné à être utilisé avec une pièce possédant deux gorges espacées disposées parallèlement et opposées l'une l'autre, le dispositif de montage comportant une première partie (12) possédant à une première extrémité un bord destiné à être engagé dans l'une des gorges, et une seconde partie (13) possédant à une première extrémité un bord destine à être engagé dans la seconde des gorges, les parties (12, 13) étant munies de moyens de fixation (17, 18) destinés à fixer les deux parties l'une par rapport l'autre de manière à se recouvrir partiellement de sorte que les deux bords soient engagés dans la gorge respective, *caractérisé* en ce que la seconde partie (13) comporte à l'autre extrémité de celle-ci un bord d'extrémité libre (18) et la première partie comporte une section plane (15) et une potence (16) faisant saillie à partir du plan de la première partie entre la section plane (15) et le bord (29), la potence 16 possédant une gorge (17) diposée pour recevoir le bord d'extrémité (18) de la seconde partie de sorte que la seconde partie (13) recouvre la section plane (15) de la première partie (12) et de façon à maintenir les deux extrémités (13, 29) à une distance fixée correspondant à la distance entre les gorges et en ce que la potence (16) possède un bord libre pourvu d'un alèsage traversant (21) destiné à un axe de charnière (25).

2. Dispositif de montage selon la revendication 1, *caractérisé* en ce que les deux parties (12, 13) sont fixées à l'encontre d'un déplacement latéral à l'aide d'au moins un organe (22) qui entoure partiellement les extrémités des parties ou s'étend à travers celles-ci.

3. Dispositif de montage selon la revendication 2, *caractérisé* en ce que l'organe (22) comporte une barre profilée en forme de U, dont les flancs (23) sont agencés pour former une fixation pour l'axe de charnière et pour fixer les parties (12, 13) à l'encontre d'un déplacement latéral et l'axe de charnière (23) s'étend à travers des alésages (24) des flancs (23).

# FIG 1

# FIG 2

FIG 3

# FIG 4